# EUROPÄISCHE PATENTSCHRIFT

(11) **EP 1 815 665 B1**
(45) Veröffentlichungstag und Bekanntmachung des Hinweises auf die Patenterteilung: **09.09.2009**
(21) Anmeldenummer: 05815654.8
(22) Anmeldetag: 09.11.2005
(51) Int. Cl.: H04L 29/12, H04L 12/58

(54) **VERFAHREN ZUR BEREITSTELLUNG EINER ADRESSE IN EINEM DATEN-NETZWERK**
METHOD FOR PROVISION OF AN ADDRESS IN A DATA NETWORK
PROCEDE POUR FOURNIR UNE ADRESSE DANS UN RESEAU DE DONNEES

(30) Priorität: 16.11.2004 DE 102004055331
(43) Veröffentlichungstag der Anmeldung: 08.08.2007
(73) Patentinhaber: SCHUMACHER, Jochen, 50996 Köln (DE)
(72) Erfinder: SCHUMACHER, Jochen, 50996 Köln (DE)
(74) Vertreter: Dammertz, Ulrich
(86) Internationale Anmeldenummer: PCT/EP2005/055845
(87) Internationale Veröffentlichungsnummer: WO 2006/053850

(56) Entgegenhaltungen:
- GB-A- 2 401 292
- US-A1- 2002 006 803
- US-B1- 6 185 184

## Beschreibung

### Technisches Umfeld

Die Erfindung betrifft ein Verfahren zur Bereitstellung einer Adresse eines mit einem Daten-Netzwerk verbundenen Online-Computers für mindestens einen Empfänger-Computer.

Insbesondere betrifft die Erfindung ein Verfahren zur Bereitstellung einer IP-Adresse des an das Internet angeschlossenen Online-Computers an andere mit dem Internet verbundene Computer. Im Folgenden wird die Erfindung in Bezug auf die Internet-Strukturen, Internet-Protokolle und die im Internet verwendeten Adressen beschrieben. Es ist für den Fachmann aber selbstverständlich, dass die Erfindung auch in Verbindung mit anderen Daten-Netzwerken und Datenübertragungsprotokollen sowie Adress-Standards verwendet werden kann.

Jeder an das Internet angeschlossene Computer muss eine eindeutige Adresse im Internet, die so genannte IP-Adresse besitzen. Zur Zeit werden IP-Adressen nach dem IPv4 (Internet Protocol version 4) eingesetzt. Sie bestehen aus vier aufeinander folgenden Bytes. Als Nachfolger wurde die Version 6 des Internet-Protokolls verabschiedet, bei der jede Adresse 16 Bytes umfasst. Gemäß dieser Version steht eine größere Anzahl von IP-Adressen zur Verfugung.

Eine große Anzahl von Computern, insbesondere privat genutzte Computer, weisen keine fest zugeordnete Adresse auf. Der Internet-Zugang wird üblicherweise durch einen Internet-Service-Provider zur Verfügung gestellt. Bei jedem Verbindungsaufbau des Computers mit dem Internet teilt der Internet-Service-Provider dem Computer eine temporäre IP-Adresse zu. Es wird auch von der Zuordnung einer dynamischen Adresse gesprochen, die einem bestimmten Computer bei jedem Aufbau einer Verbindung mit dem Internet neu zugeteilt wird.

Für eine Vielzahl von Anwendungen ist der direkte Datenaustausch zwischen zwei an das Internet angeschlossenen Computern erforderlich. Ein derartiger direkter Datenaustausch kann nur ausgeführt werden, wenn der die Datenübertragung durchführende Computer die aktuelle Adresse des Computers kennt, auf den die Daten übertragen werden sollen.

Aus diesem Grund wurden Programme entwickelt, die die direkte Kommunikation zwischen zwei an das Internet angeschlossenen Computern mit dynamischer Internet-Adresse zulassen. Derartige Programme werden Instant Messager genannt. Das Programm "ICQ" (I seek you) ist ein weit verbreitetes Beispiel für einen solchen Instant Massager. Ein Benutzer dieses Programms kann eine Freundesliste (Buddy List) anlegen. Der Besitzer des Computers trägt in die Freundesliste Identifikationen derjenigen Computer ein, mit denen ein direkter Verbindungsaufbau möglich sein soll. Jeder Benutzer eines ICQ-Programms wird bei der Einwahl in das Internet automatisch mit einem zentralen Computer verbunden, über den dann Unterhaltungen (Chat) geführt und Dateien ausgetauscht oder Nachrichten verschickt werden können.

Es ist auch alternativ möglich, anstelle der Nachrichten-Weiterleitung über den zentralen Computer bei der Einwahl in das Internet hier lediglich die dem eigenen Computer temporär zugeordnete IP-Adresse abzulegen. Alle Benutzer des gleichen ICQ-Programms können dann von dem zentralen Computer die aktuellen temporären IP-Adressen der zur Zeit mit dem Internet verbundenen Computer auf ihrer Buddy-List abrufen.

Der Nachteil der bekannten ICQ-Programme liegt darin, dass die Abfrage und Übermittlung der IP-Adressen zentral von einem Computer durchgeführt werden. Eine derartige zentrale Datenverwaltung ermöglicht zum einen die Überwachung der Kommunikation und zum anderen den gezielten Einsatz unaufgeforderter Meldungen (SPAM) oder Werbehinweise an die Nutzer des Programms.

### Offenbarung der Erfindung

Aufgabe der vorliegenden Erfindung nach dem Anspruch 1 ist es, ein Verfahren zur Übermittlung einer Adresse, insbesondere einer temporären IP-Adresse, zu schaffen, bei dem die genannten Nachteile nicht auftreten.

Die Druckschrift GB 2 401 292 A offenbart ein Verfahren zur Bereitstellung einer Adresse eines mit einem Daten-Netzwerk verbundenen Online-Computers für mindestens einen Empfänger-Computer, bei dem die IP-Adresse in verschlüsselter Form auf der Webpage des Inhabers des Online-Computers abgespeichert wird. Damit folglich nicht jeder Dritte die IP-Adresse des Inhabers des Online-Computers auslesen kann wird bei diesem Verfahren ein großer Verschlüsselungsaufwand getrieben.

Die Druckschrift US 2002/0006803 A1 beschreibt ein System und ein Verfahren für die Zuweisung eines eindeutigen Identifikators zu einem zukünftigen Nutzer eines Instant-Messaging-Systems.

Diese Aufgabe wird erfindungsgemäß dadurch gelöst, dass ein Online-Computer, dessen Adresse in dem Daten-Netzwerk für einen oder mehrere Empfänger-Computer bereitgestellt werden soll, die folgenden Schritte ausführt:
- Übertragung eines ersten Datensatzes mit der Identifizierung mindestens einer global über das Daten-Netzwerk zugreifbaren Serverstruktur an den Empfänger-Computer, wobei die Serverstruktur aus einer Mehrzahl verfügbarer Serverstrukturen ausgewählt ist;
- Übertragung eines zweiten Datensatzes, der mindestens eine Code-Bezeichnung identifiziert, an den Empfänger-Computer,
- Abspeicherung der Adresse des Online-Computers in Verbindung mit der Code-Bezeichnung auf der identifizierten Serverstruktur.

Mit anderen Worten wird der Austausch von Adressen nicht mehr über einen zentralen Computer, sondern mit Hilfe einer Mehrzahl verfügbarer, global über das Daten-Netzwerk erreichbarer (zugreifbarer) Serverstrukturen durchgeführt. Hierfür sind insbesondere über das Internet zugreifbare IRC-Netzwerke und IRC-Server geeignet.

IRC (Internet Relay Chat) ist ein System, das es ermöglicht, über das Internet gleichzeitig mit vielen anderen Internet-Teilnehmern zu kommunizieren. Ein IRC-Netz besteht aus mindestens einem, meist jedoch aus einer Vielzahl von IRC-Server, auf die jeder an das Internet angeschlossene Computer frei zugreifen kann. Jeder Teilnehmer in einem IRC-Netzwerk ist ausschließlich unter seinem Spitznamen bekannt, den er selbst und frei wählen kann. Die einzige Einschränkung ist, dass der Spitzname nicht länger als 9 Zeichen sein darf und zur gleichen Zeit der identische Spitzname nicht ein zweites Mal in einem IRC-Netzwerk benutzt wird. Die ersten IRC-Programme stammen aus den späten 80er Jahren. Das IRC hat sich anschließend im Internet verbreitet. Es existieren mehrere weltumspannende Netzwerke mit einer Vielzahl von IRC-Servern.

Das älteste und größte Netzwerk ist das so genannte EFNet. Hiervon abgespalten hat sich das IRCNet. Andere IRC-Netzwerke sind das Undernet, das DALnet, die deutschen Netze Wunder-Net (ein Server in diesem Netz ist IRC-wunder-net.org) und das BLAFASELNet (ein Server in diesem Netzwerk ist lam.blafasel.de). In anderen Ländern werden weitere nationale IRC-Netze betrieben. Die Kommunikation im IRC erfolgt über Textzeilen.

Zur Durchführung der Erfindung ist es nicht erforderlich, als Serverstruktur ein Netzwerk mit einer Vielzahl von unterschiedlichen Servern zu bestimmten. Ein einzelner Server, auf dem man sich unter einem Spitznamen oder Alias, d.h. ohne Preisgabe der eigenen Identität, anmelden kann und von dem andere Internet-Nutzer eine eindeutige Adresse (z.B. DNS-Adresse oder IP-Adresse) eines angemeldeten Benutzers abrufen können, reicht zur funktionsfähigen Durchführung des erfindungsgemäßen Verfahrens aus. Der Server muss eine Funktionalität besitzen, dass auf eine Anfrage, die die Code-Bezeichnung eines bestimmten Users enthält, eine Antwort mit dessen Adresse zurückgesendet wird.

IRC-Server und IRC-Netzwerke sind nur ein Beispiel von global zugreifbaren Serverstrukturen im Internet, mit denen sich das erfindungsgemäße Verfahren durchführen lässt.

Da kein zentraler Computer zur Weitergabe der IP-Adressen verwendet wird, besteht nicht die Möglichkeit, die Benutzer des erfindungsgemäßen Verfahrens zu beobachten oder ihr Verhalten zu analysieren. Dies reduziert die Gefahr, dass an die Benutzer des Verfahrens unerwünschte Nachrichten und Werbemitteilungen geschickt werden. Auch ist kein zentraler Computer in der Lage, die IP-Adresse aller das erfindungsgemäße Verfahren anwendenden Personen zu ermitteln und ggf. gezielt für die Verbreitung von SPAM o.ä. einzusetzen.

Neben der Identifizierung der global zugreifbaren Serverstruktur in dem ersten Datensatz wird an den Empfänger-Computer ein zweiter Datensatz übermittelt, der mindestens eine Code-Bezeichnung identifiziert. Wenn die Serverstruktur ein IRC-Server oder ein IRC-Netz ist, ist diese Code-Bezeichnung ein so genannter Nickname (deutsch: Spitzname). Selbstverständlich können beide Datensätze innerhalb einer einzigen Datenstruktur oder Datei zusammengefasst sein.

Schließlich wird auf den global zugreifbaren Server die Adresse in Verbindung mit der Code-Bezeichnung abgespeichert.

Wiederum bei der Verwendung eines IRC-Servers meldet sich hierzu der Online-Computer einfach unter dem Nickname, der der in dem zweiten Datensatz identifizierten Code-Bezeichnung entspricht, auf dem durch den ersten Datensatz identifizierten IRC-Server an. Bei dieser Anmeldung wird auf dem IRC-Server entweder die aktuell zugeteilte IP-Adresse des Online-Computers abgespeichert oder eine DNS-Adresse.

Das DNS (Domain Name System) ist ein System, welches IP-Adressen eindeutig bestimmten Domain-Namen zuordnet. Einem Internet-Teilnehmer, der über einen Internet-Service-Provider mit dem Internet verbunden ist, wird von dem Internet-Service-Provider häufig ein bestimmter Nutzer-Name in Verbindung mit dem Domain-Namen des Internet-Service-Providers zugeordnet. Über so genannte DNS-Server kann die IP-Adresse des Internet-Service-Providers ermittelt werden, der über den Nutzer-Namen Daten an den Computer des zugehörigen Benutzers leitet.

Durch die Anmeldung des Online-Computers wird also entweder die diesem aktuell zugeteilte IP-Adresse oder eine dieser IP-Adresse eindeutig zugeordnete Adresse, insbesondere DNS-Adresse, auf dem Server abgespeichert. Der Empfänger-Computer braucht folglich lediglich eine Anfrage an den identifizierten Server in Verbindung mit der Code-Bezeichnung zu senden, welche durch die Serverstruktur mit einer die Adresse des Online-Computers enthaltenden Antwort beantwortet wird.

Wenn die Serverstruktur ein IRC-Server oder ein IRC-Netzwerk ist, ist die geeignete Anfrage ein WHOIS-Befehl. Dieser Befehl sendet dann verschiedene Informationen des auf dem Server angemeldeten Online-Computers an den abfragenden Empfänger-Computer. Unter diesen Informationen befindet sich die Adresse des Online-Computers.

Es existieren auch IRC-Netzwerke oder IRC-Server, die einen WHOIS-Befehl nicht akzeptieren und nicht die Adresse eines auf diesem Server oder in diesem Netzwerk angemeldeten Teilnehmers preisgeben. In diesem Fall kann die Funktion des IRC-Servers als Nachrichtenvermittler genutzt werden. Der Empfänger-Computer kann zur Ermittlung der IP-Adresse des Online-Computers eine Anfrage an die Serverstruktur unter Angabe des durch den Online-Computer verwendeten Nicknames senden. Die Serverstruktur leitet diese Anfrage dann an die Adresse weiter, die dem Nickname zugeordnet ist. Die Anfrage wird von dem erfindungsgemäßen Programm, das auf dem Online-Computer abläuft, erkannt und veranlasst den Online-Computer, als Antwort seine Adresse an den Empfänger-Computer zurückzusenden. Auch hierzu kann der Online-Computer die Nachrichtenvermittlungsfunktion des Servers nutzen und seine Antwort an den Server senden, wobei er als Adressaten den Nickname angibt, unter dem sich der Empfänger-Computer auf dem Server angemeldet hat. Alternativ kann der Online-Computer seine IP-Adresse unmittelbar an die IP-Adresse des Empfänger-Computers senden. Hierfür ist es erforderlich, dass der Empfänger-Computers zuvor in seiner Anfrage die eigene IP-Adresse angegeben hat.

In bestimmten Fällen kann - wie erwähnt - anstelle der IP-Adresse eine Adresse mitgeteilt werden, die auf dem Domain Name System (DNS) basiert. Wenn eine DNS-Adresse des Online-Computers zurückgesendet wird, muss der Empfänger-Computer eine zweite Anfrage über das Internet versenden, um die IP-Adresse zu ermitteln. Diese zweite Anfrage kann z.B. der Konsolenbefehl nslookup, gefolgt von der DNS-Adresse, sein. Gängige Betriebssysteme, wie z.B. die Windows-Betriebssysteme der Firma Microsoft, stellen eine Standardfunktion getHostbyName (DNS-Adresse) zur Verfügung, welche die Absendung der zweiten Anfrage auslöst, woraufhin die IP-Adresse von DNS-Servern zurückgesendet wird. Diese zweite Anfrage kann auch ein PING (Packet Internet Groper) sein, der an die DNS-Adresse des Online-Computers gerichtet ist und mit Hilfe der DNS-Server an die IP-Adresse des Internet-Service-Providers und von diesem an den Computer des Nutzers (Online-Computer) weitergeleitet wird. Die auf einen PING von dem Online-Computer zurückgesendete Antwort enthält grundsätzlich die IP-Adresse des Online-Computers.

Bei einer praktischen Ausführungsform ist der Identifizierung einer global über das Daten-Netzwerk zugreifbaren Serversstruktur eine zeitlich begrenzte Gültigkeit zugeordnet. Mit anderen Worten ist der Name des Servers oder des Netzwerkes mit einem Zeitstempel versehen. Dieser Zeitstempel kann z.B. einen Zeitpunkt definieren, ab dem die identifizierte Serverstruktur nicht mehr für das erfindungsgemäße Verfahren verwendet wird. Der Zeitstempel kann auch einen Zeitraum mit Anfangszeitpunkt und Endzeitpunkt enthalten, in dem die identifizierte Serverstruktur für das erfindungsgemäße Verfahren verwendet wird. Jeder Zeitpunkt wird durch Angabe von Tag, Monat und Jahr, ggf. auch von Sekunde, Minute und Stunde definiert.

Der erste Datensatz kann jeder Serverstruktur auch mehrere Zeitstempel zuordnen, so dass jede Serverstruktur zu unterschiedlichen Zeiten für das erfindungsgemäße Verfahren eingesetzt wird. In der Praxis kann der erste Datensatz eine Mehrzahl von Identifizierungen für global zugreifbare Serverstrukturen enthalten, die jeweils mit Zeitstempeln versehen sind, wobei die Gültigkeitszeiträume unterschiedlicher Serverstrukturen verschiedene Zeitintervalle abdecken. Für jedes Zeitintervall können eine Hauptserverstruktur und eine Backup-Serverstruktur zur Verfügung stehen. Die Backup-Serverstruktur wird für das erfindungsgemäße Verfahren benutzt, wenn der Hauptserver ausfällt. Wie erwähnt, können jeder Serverstruktur mehrere Zeitstempel zugeordnet werden, so dass die entsprechende Serverstruktur in verschiedenen Zeitintervallen für das erfindungsgemäße Verfahren genutzt wird. Der erste Datensatz sollte Server-Identifizierungen umfassen, die für einen bestimmten Zeitraum (z.B. 1 Monat, 3 Monate oder 5 Monate) Gültigkeit haben. Die Dauer kann durch den Benutzer wählbar sein. Durch die zeitlich begrenzte Gültigkeit des Datensatzes wird vermieden, dass das erfindungsgemäße Verfahren von Unbefugten missbraucht wird.

Bei der ersten Kontaktaufnahme wird üblicherweise eine E-Mail versandt, die möglicherweise von einem Unbefugten abgefangen oder gelesen wird. Damit dieser Unbefugte nicht für unbegrenzte Zeit die für das erfindungsgemäße Verfahren und somit die Abfrage der IP-Adresse des Online-Computers erforderlichen Informationen erhält, ist die Gültigkeit des Datensatzes zeitlich beschränkt. Da bei der ersten Kontaktaufnahme eine relativ unsichere Datenübertragung über das E-Mail-System erfolgt, kann hierfür eine sehr kurze Gültigkeitsdauer der Daten des ersten Datensatzes festgelegt werden. Die Gültigkeitsdauer kann z.B. einen Tag oder eine Woche betragen. Nachdem einmal direkter Kontakt über die mitgeteilte IP-Adresse aufgenommen wurde, können erste Datensätze übermittelt werden, in denen die hier definierten Server in einem längeren Gesamtzeitraum Gültigkeit haben. Diese Datensätze werden direkt an die dynamische IP-Adresse des Empfänger-Computers gesandt und sind daher praktisch nicht durch Dritte abfangbar oder lesbar. Selbst wenn sie abgefangen werden, ist es Dritten nicht möglich, die Datensätze bestimmten Computern oder Personen zuzuordnen, da die Dritten als Absender lediglich die temporäre IP-Adresse des sendenden Computers und als Empfänger die temporäre IP-Adresse des empfangenden Computers aufweisen.

In diesem Zusammenhang ist zu erwähnen, dass das erfindungsgemäße Verfahren auch von Computern mit fester IP-Adresse verwendet werden kann. Hier wäre es zwar einfacher, die eigene feste IP-Adresse einmal an den Empfänger-Computer weitetzugeben. Die Verwendung des erfindungsgemäßen Verfahrens auf Computern mit fester IP-Adresse ist dennoch sinnvoll, da diese Computer an einem standardisierten Verfahren gemäß der Erfindung teilnehmen können, über das mehrere Individuen einer Community (deutsch: Gemeinschaft) die IP-Adressen austauschen, die meist über dynamische IP-Adressen verfügen.

Gleichermaßen kann in der Praxis der Code-Bezeichnung, die gemäß dem zweiten Datensatz ermittelt wird, eine zeitlich begrenzte Gültigkeit zugeordnet werden. Der zweite Datensatz kann eine Mehrzahl von Code-Bezeichnungen mit zeitlich begrenzter Gültigkeit identifizieren, deren Gültigkeitsdauern verschiedene Zeitintervalle abdecken.

Die Code-Bezeichnung kann mittels eines Algorithmus auf dem Online-Computer berechnet und dann vollständig in den zweiten Datensatz geschrieben werden. Es ist aber auch möglich, grundsätzlich die Code-Bezeichnung über einen Algorithmus berechnen zu lassen. Nutzer des gleichen Verfahrens setzen das gleiche Computerprogramm ein, in dem der Algorithmus zur Berechnung der Code-Bezeichnung definiert sein kann. Der Algorithmus zur Berechnung der Code-Bezeichnung kann in der Praxis mindestens eine Variable enthalten. Der zweite Datensatz kann dann lediglich einen Wert für diese Variable enthalten, so dass der Online-Computer und der Empfänger-Computer mit dem gleichen Algorithmus die gleiche Code-Bezeichnung berechnen.

Dieser Variablen oder diesen Variablen im zweiten Datensatz können aus oben genannten Gründen wiederum begrenzte Gültigkeiten zugeordnet sein.

Der Algorithmus kann zur Berechnung der Code-Bezeichnung auf weitere variable Informationen, z.B. zeitabhängige Informationen wie das Datum, auf den Namen des Benutzers des Verfahrens etc. zurückgreifen.

In der Praxis kann das erfindungsgemäße Verfahren als so genannter "Hand-Shake" ausgeführt werden. Das heißt, dass nicht nur der Online-Computer an einen oder mehrere Empfänger-Computer die Informationen übermittelt, die es dem Empfänger-Computer ermöglichen, die Adresse des Online-Computers zu ermitteln. Auch der Empfänger-Computer überträgt an den Online-Computer einen ersten Datensatz mit der Identifizierung mindestens einer global über das Daten-Netzwerk zugreifbaren Serverstruktur, wobei die Serverstruktur aus einer Mehrzahl verfügbarer Serverstrukturen ausgewählt ist. Ferner überträgt der Empfänger-Computer an den Online-Computer einen zweiten Datensatz, der mindestens eine Code-Bezeichnung identifiziert. Schließlich speichert der Empfänger-Computer seine Adresse, insbesondere eine ihm aktuell zugeteilte IP-Adresse oder eine dieser IP-Adresse eindeutig zugeordnete DNS-Adresse, in Verbindung mit der Code-Bezeichnung auf der identifizierten Serverstruktur. Somit können beide beteiligten Computer die aktuelle Adresse des jeweils anderen Computers in Erfahrung bringen. Jedes Mal, wenn beide Computer gleichzeitig am Internet angeschlossen sind und die IP-Adresse des anderen Computers abrufen, übertragen sie an diese IP-Adresse einen aktualisierten ersten Datensatz und einen aktualisierten zweiten Datensatz. So wird sichergestellt, dass die Datensätze auf Computern, welche häufig gemäß dem erfindungsgemäßen Verfahren miteinander kommunizieren, nicht die maximale Gültigkeitsdauer überschreiten, wodurch die erfindungsgemäßen IP-Adressen-Übertragung oder -Abfrage nicht mehr möglich ist und das Verfahren erneut durch Übersendung einer E-Mail-Anfrage gestartet werden müsste.

Ein Ziel der Erfindung ist die Bildung einer Community, das heißt einer Gemeinschaft mit einer Vielzahl von Benutzern des erfindungsgemäßen Verfahrens auf einer Vielzahl von diesen Benutzern zugeordneten Computern. Die Benutzer können innerhalb der Community individuell diejenigen Partner (bzw. ihre Computer) für die Durchführung des erfindungsgemäßen Verfahrens zur gegenseitigen Bereitstellung der dynamischen IP-Adressen auswählen. Wie erwähnt, ist eine Überwachung oder Identifizierung der Mitglieder der Community und der von ihnen verwendeten Serverstrukturen oder Code-Bezeichnungen nicht möglich, weil die Code-Bezeichnungen anonym auf den Serverstrukturen abgelegt sind und eine Zuordnung zur tatsächlichen Identität des Mitglieds der Community nur dem anderen Teilnehmer an dem erfindungsgemäßen Verfahren möglich ist.

In der Praxis kann vor dem erstmaligen Übersenden des ersten und des zweiten Datensatzes eine diese Übersendung bestätigende Eingabe eines Benutzers des Computers mittels einer an den Computer angeschlossenen Eingabevorrichtung erforderlich sein.

Die bei diesem Verfahren eingesetzten Computer sind in der Regel Personal-Computer von bestimmten Benutzern, an welche eine Anzeigevorrichtung (z.B. Bildschirm) und eine Eingabevorrichtung (z.B. Maus oder Tastatur) angeschlossen sind. Bevor von diesem Computer die zur Durchführung des Verfahrens erforderlichen Datensätze an einen zweiten Computer übermittelt werden, sollte der Benutzer mindestens eine Eingabe aktiv durchführen, damit das erfindungsgemäße Verfahren keinesfalls ohne Wollen und Wissen des Benutzers des Computers abläuft.

Dabei kann die bestätigende Eingabe der Befehlsabsendung einer elektronischen Nachricht (E-Mail) an eine bestimmte Adresse sein, wobei die Nachricht den ersten und den zweiten Datensatz enthält. Diese Nachricht versendet der Benutzer üblicherweise an ihm bekannte Empfänger, um mit ihnen die Durchführung des erfindungsgemäßen Verfahrens zu vereinbaren. Wenn der Benutzer die Aufforderung zur Durchführung des erfindungsgemäßen Verfahrens zeitlich beschränken möchte, kann die Gültigkeit der Daten in dem ersten und zweiten Datensatz der Nachricht auf einen beliebig kurzen Zeitraum beschränkt sein.

Seitens des Empfängers der E-Mail sollte ebenfalls eine bestätigende Eingabe erforderlich sein. Der Computer, der die genannte elektronische Nachricht mit dem ersten und zweiten Datensatz empfangen hat, zeigt die Identität des Absenders der Nachricht auf einer mit dem Computer verbundenen Anzeigevorrichtung an und fordert den Benutzer auf, durch eine Eingabe mittels einer Eingabevorrichtung (z.B. Maus oder Tastatur) die erfindungsgemäße Kommunikation zu bestätigen. Bestätigt der Benutzer des empfangenden Computers die Kommunikation, wird von diesem Computer ein erster und zweiter Datensatz zurück an den ersten Computer gesendet. Wird die Aufforderung zur Kommunikation nicht bestätigt, werden die genannten Datensätze nicht an den Absender der Nachricht zurückgesendet. Sinnvollerweise erhält der Absender der Nachricht eine E-Mail, in der mitgeteilt wird, dass seine Anfrage verneint wurde.

Die Erfindung betrifft ferner ein Computerprogrammprodukt nach dem Anspruch 22, das direkt in den Arbeitsspeicher eines Computers geladen werden kann und Software-Code-Abschnitte umfasst, mit denen die Schritte gemäß dem zuvor beschriebenen Verfahren ausgeführt werden, wenn das Produkt auf einem Computer läuft.

### Kurze Beschreibung von Zeichnungen

Nachfolgend werden Ausführungsformen der Erfindung unter Bezugnahme auf die beigefügten Zeichnungen beschrieben. Die Zeichnungen zeigen in:
- **Fig. 1**: eine schematische Darstellung eines Netzwerk-Systems zur Durchführung des erfindungsgemäßen Verfahrens und
- **Fig. 2**: ein schematisches Flussdiagramm eines Computerprogramms zur Erzeugung der bei dem erfindungsgemäßen Verfahren verwendeten Datensätze,
- **Fig. 3**: ein schematisches Flussdiagramm eines Computerprogramm-Moduls, welches die eigene Adresse gemäß der Erfindung bereitstellt,
- **Fig. 4**: ein schematisches Flussdiagramm eines Computerprogramm-Moduls, welches gemäß der Erfindung eine IP-Adresse ermittelt.

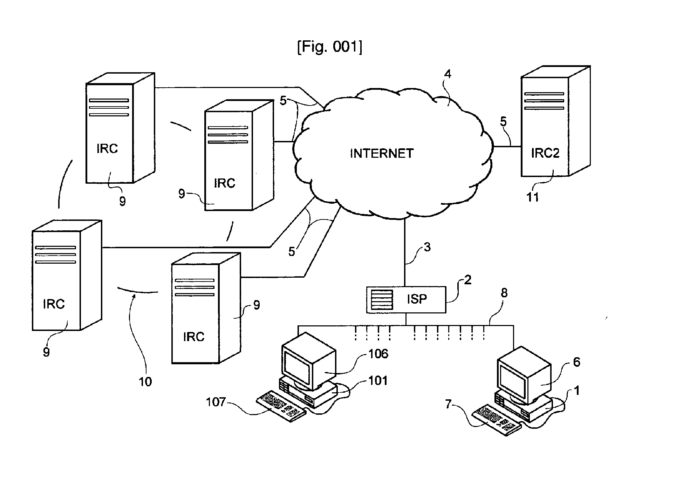

In Fig. 1 sind mehrere Computer dargestellt, die an das Internet angeschlossen sind. Unten sind zwei Personal-Computer (PC) 1 und 101 zu erkennen, die über Kommunikationsleitungen 8 wie Telefonleitungen, ISDN-Leitungen oder Breitbandverbindungen mit dem Computer 2 eines Internet-Service-Providers verbunden sind. Der Computer 2 des Internet-Sevice-Providers ist über eine Breitband-Datenleitung 3 mit dem Internet 4 verbunden. Jeder Personal-Computer 1, 101 ist mit den üblichen Bestandteilen (CPU, RAM, Festplatte, Speicherlaufwerk wie CD, DVD, Diskettenlaufwerke, Netzteil, MODEM etc.) ausgerüstet. Ferner ist eine Ausgabeeinheit in Form eines Bildschirms 6, 106 und einer Eingabeeinheit in Form einer Tastatur 7, 107 jedem Personal-Computer 1, 101 zugeordnet. Moderne PCs verfügen häufig über weitere Ausgabeeinheiten wie Lautsprecher, Drucker etc. und weitere Eingabeeinheiten wie Maus, Trackball, Mikrofon, Scanner etc.

Die PCs 1, 101 sind nicht permanent mit dem Internet verbunden und besitzen keine permanente IP-Adresse. Stattdessen bauen sie je nach Bedarf eine Verbindung über die Kommunikationsleitung 8 mit dem Computer 2 des Internet-Service-Providers auf. Bei diesem Verbindungsaufbau weist der Computer 2 des Internet-Service-Providers den PCs 1, 101 jeweils eine temporäre IP-Adresse dynamisch zu.

In der Fig. 1 sind ferner mehrere IRC-Server 9 zu erkennen, die jeweils über geeignete Datenleitungen 5 mit dem Internet verbunden sind. Es ist nicht erforderlich, dass jeder IRC-Server 9 ein eigenständiger Computer ist. Häufig werden IRC-Server 9 von bestimmten Serverprogrammen gebildet, die auf einem fest mit dem Internet 4 verbundenen Web-Server ablaufen, welche neben dem IRC-Server weitere Server-Funktionen ausführen. Die Tatsache, dass die links im Bild dargestellten IRC-Server 9 einem gemeinsamen IRC-Netzwerk 10 zugeordnet sind, bedeutet nicht, dass die IRC-Server 9 räumlich nahe beieinander angeordnet sein müssen. Ein IRC-Netzwerk 10 kann mehrere hundert IRC-Server umfassen, die auf verschiedenen Kontinenten stehen.

Rechts in der Figur ist ein weiterer IRC-Server 11 dargestellt, der nicht dem genannten IRC-Netzwerk 10 angehört. Der IRC-Server 11 kann entweder in Alleinstellung die Chat-Funktionen des IRC (Internet Relay Chat) ausführen oder in Verbindung mit anderen IRC-Servern ein zweites IRC-Netzwerk bilden.

Da die PCs 1 ,101 bei jedem Verbindungsaufbau mit dem Internet 4 eine neue IP-Adresse von ihrem Internet-Service-Provider 2 zugewiesen bekommen, können die PCs 1 und 101 nicht direkt über das Internet 4 miteinander kommunizieren. Zur unmittelbaren Übertragung eines Datensatzes auf einen der PCs 1, 101 ist es erforderlich, dass dessen IP-Adresse bekannt ist.

Die PCs 1, 101 können somit nur mittelbar Daten miteinander austauschen. Dies erfolgt beispielsweise über E-Mail-Dienstleistungen, welche in der Regel vom Internet-Service Provider angeboten werden. Der Computer 2 des Internet-Service-Providers verwaltet mehrere so genannte E-Mail-Accounts. Für den Zugriff auf ein E-Mail-Account auf dem Computer 2 des Internet-Service Providers sind Zugriffsinformationen wie der Name des E-Mail-Servers und ein Kennwort erforderlich. Die PCs 1,101 können somit Nachrichten, welche an ihr E-Mail-Account im Computer 2 des Internet-Service-Providers gesendet wurde, abrufen.

Das erfindungsgemäße Verfahren ermöglicht mit Hilfe der in Fig. 1 dargestellten und über das Internet 4 vernetzten Komponenten eine Bereitstellung und Übermittlung der IP-Adresse eines PCs 1 zu einem oder mehreren weiteren PCs 101. Bei diesem Verfahren werden Funktionalitäten verwendet, die beispielsweise die IRC-Server 9,11 von IRC-Netzwerken anbieten. Das erfindungsgemäße Verfahren ist aber in keiner Weise auf den Einsatz im Internet oder die genannten IRC-Server 9,11 beschränkt. Jede Netzwerkstruktur, z.B. ein lokales Netzwerk (Local Area Network LAN) und jeder andere Server oder Computer mit einem festen Anschluss an diese Netzwerkstruktur, der global zugreifbar ist, d.h., von dem andere an die Netzwerkstruktur angeschlossene Computer Daten abrufen können, und der ähnliche Funktionalitäten wie ein IRC-Server aufweist, kann zur Durchführung des erfindungsgemäßen Verfahrens genutzt werden. Voraussetzung für das erfindungsgemäße Verfahren ist die Abspeicherung einer Adresse eines Computers in der Netzwerkstruktur in Verbindung mit einer eindeutigen Code-Bezeichnung dieses Computers auf der Serverstruktur und die Möglichkeit des Abrufs der abgespeicherten Adresse unter Nennung der zugeordneten Code-Bezeichnung.

Diese Funktionalitäten sind grundlegender Bestandteil des so genannten Internet-Relay-Chat. Beim Internet-Relay-Chat wird jedem Teilnehmer an einem Chat-Netzwerk ein Spitzname zugeordnet, der üblicherweise mit der englischen Bezeichnung "Nickname" bezeichnet wird. Dieser Nickname besteht aus maximal 9 aufeinander folgenden Zeichen. In einem IRC-Netzwerk 10 darf ein Nickname nur einmal verwendet werden.

Bei der Anmeldung eines Computers eines bestimmten Benutzers auf einem IRC-Server 9 wird auf dem Server 9 zusammen mit dem durch den Benutzer gewählten Nickname die Adresse seines Computers abgespeichert. Je nach Struktur des IRC-Servers oder des IRC-Netzwerks und je nach den von dem Computer 2 des Internet-Service-Providers an den IRC-Server übermittelten Informationen wird entweder die IP-Adresse selbst, bestehend aus 4 Bytes, in Verbindung mit dem Nickname abgespeichert oder es wird ein Zeichen-String abgespeichert. Der Zeichen-String enthält die Adresse nach dem DNS (Domain-Name-System) des Computers 2 des Internet-Service-Providers zusammen mit einer individuellen Identifizierung der einzelnen PCs 1 oder 101, die über den Computer 2 des Internet-Service-Providers mit dem Internet verbunden ist.

Durch Absenden eines WHOIS-Befehls in Verbindung mit dem Nickname kann die IP-Adresse oder die dieser zugeordnete Adresse ermittelt werden. Der IRC-Server 9, 11, auf dem der Benutzer unter dem genannten Nickname angemeldet ist, sendet auf den WHOIS-Befehl die genannte Adresse an den anfragenden Computer. Wenn die zurückgesendete Adresse eine DNS-Adresse ist, kann der anfragende Computer eine zweite Anfrage in Verbindung mit der DNS-Adresse (z.B. Packet-Internet-Groper (PING), nslookup-Befehl oder getHostbyName-Funktion) versenden. Als Antwort erhält der anfragende Computer die der DNS-Adresse zugeordnete IP-Adresse.

Es ist zu beachten, dass die Nicknames von den Teilnehmern am IRC frei gewählt werden können und auch weitere auf den IRC-Servern gespeicherte Daten beliebig durch die Teilnehmer angegeben werden können. Aus diesem Grund ist es in der Regel nicht möglich, die wahre Identität eines IRC-Teilnehmers zu ermitteln.

Hier setzt das Verfahren auf. Es nutzt die Möglichkeit, sich unter einem beliebigen Synonym in einem Internet-Relay-Chat anzumelden. Dabei verwendet das erfindungsgemäße Verfahren eine Mehrzahl von Serverstrukturen, auf denen sich ein Teilnehmer unter einem frei ausgewählten Synonym anmelden kann. Auf diese Weise wird vermieden, dass die Serverstruktur ein Programm ablaufen lässt, mit dem sie die Kontaktaufnahmen und Kommunikationen zwischen verschiedenen Nutzern des erfindungsgemäßen Verfahrens überwacht. Die in großer Anzahl an das Internet angeschlossenen IRC-Netzwerke werden zur direkten Kontaktaufnahme verwendet.

Dabei übermittelt ein erster PC 1, nachfolgend Online-Computer genannt, an einen zweites PC 101, nachfolgend Empfänger-Computer genannt, diejenigen Daten, die es dem Empfänger-Computer 101 ermöglicht, die IP-Adresse des Online-Computers 1 abzurufen.

Es wird ein erster Datensatz übertragen, mit dem eine Serverstruktur identifiziert wird, auf der sich der Online-Computer 1 mit einem bestimmten Synonym anmeldet. Wie erwähnt, kann die Serverstruktur entweder ein Einzelserver 9, 11 oder ein IRC-Netzwerk 10 aus der Vielzahl der verfügbaren IRC-Netzwerke sein.

Dabei können in dem Datensatz, den der Online-Computer 1 an den Empfänger-Computer 101 ermittelt, für verschiedene Zeiträume unterschiedliche Serverstrukturen 10, 11 definiert sein. So kann für jeden Tag eine andere Serverstruktur 10, 11 ausgewählt werden.

An einem Tag kann beispielsweise das IRC-Netzwerk 10 als Serverstruktur gewählt werden. Am darauf folgenden Tag kann der IRC-Server 11 als Serverstruktur gewählt werden. Jeder in dem ersten Datensatz definierten Serverstruktur 10,11 wird somit eine begrenzte zeitliche Gültigkeit zugeordnet. Es können auch mehrere Serverstrukturen für einen bestimmten Zeitpunkt definiert werden. In diesem Fall meldet sich der Online-Computer 1 auf beiden Serverstrukturen gleichzeitig an. Es muss allerdings darauf geachtet werden, dass die Serverstrukturen nicht zu dem gleichen IRC-Netzwerk gehören, da anderenfalls die Anmeldung unter dem gleichen Nickname nicht möglich ist. Alternativ kann jeder gleichzeitig verwendeten Serverstruktur ein anderer Nickname zugeordnet werden.

Der Online-Computer 1 übermittelt an den Empfänger-Computer 101 ferner einen zweiten Datensatz, der mindestens eine aktuell gültige Code-Bezeichnung, insbesondere einen Nickname für ein IRC-Netzwerk 10 definiert. Der zweite Datensatz kann beispielsweise sieben Nicknames in beliebigen Wechseln verschiedenen Tagen zuordnen. Alternativ können Algorithmen zur Berechnung eines Nicknames eingesetzt werden, wobei der zweite Datensatz lediglich noch die Werte für eine oder mehrere Variablen in dem Berechnungsalgorithmus umfasst.

Der Empfänger-Rechner 101 kann nun in Kenntnis des Nicknames und der Serverstruktur, die der Online-Rechner 1 für die Bereitstellung seiner IP-Adresse benutzt, auf die oben beschriebene Weise die IP-Adresse ermitteln. Er sendet einen WHOIS-Befehl in Verbindung mit dem Nickname an die identifizierte Serverstruktur 10 oder 11 und erforderlichenfalls eine zweite Anfrage zur Umwandlung der empfangenen DNS-Adresse in eine IP-Adresse.

Falls die WHOIS-Anfrage unbeantwortet bleibt und weder eine IP-Adresse oder eine DNS-Adresse des Online-Computers 1 liefert, kann der Empfänger-Computer 101 eine definierte Textnachricht über den IRC-Server 9, 11 an den Online-Computer 1 senden, indem als Empfänger dieser Nachricht der Nickname des Online-Computers 1 angegeben wird. Der IRC-Server 9,11 leitet die Nachricht dann an die IP-Adresse oder die DNS-Adresse des Online-Computers 1 weiter. Ein auf dem Online-Computer 1 laufendes Programm-Modul gemäß der Erfindung sendet als Antwort die IP-Adresse des Online-Computers 1 an den Empfänger-Computer 101 zurück. Falls die von dem Empfänger-Computer 101 erzeugte definierte Textnachricht die IP-Adresse des Empfänger-Computers 101 enthält, kann diese Antwort direkt an diese IP-Adresse gesendet werden. Anderenfalls kann die Antwort unter Verwendung des Nicknames des Empfänger-Computers 101 über das IRC-Netz an den Empfänger-Computer 101 gesendet werden.

Sobald der Empfänger-Computer 101 die IP-Adresse ermittelt hat, übermittelt er vorzugsweise an den Online-Computer 1 seine eigene IP-Adresse. In diesem Fall können die beiden Computer bidirektional direkt miteinander kommunizieren. Außerdem übermittelt der Empfänger-Computer 101 vorzugsweise seinerseits einen Datensatz mit einer Liste von Serverstrukturen, die der Empfänger-Computer 101 in einem gegebenen Zeitabschnitt (z.B. einer Woche, einem Monat oder mehreren Monaten) verwenden wird, sowie mit Informationen über die in diesem Zeitraum verwendeten Nicknames. Auf diese Weise kann auch der Online-Computer 1 die IP-Adresse des Empfänger-Computers 101 bei zukünftigen Anmeldungen an das Internet in Erfahrung bringen.

Um die Durchführung des erfindungsgemäßen Verfahrens auf zwei Computern 1, 101 zu starten, sendet der Benutzer eines der beiden Computer 1 oder 101 eine E-Mail an den anderen der beiden Computer 101 bzw. 1. In dieser Nachricht sind die zwei Datensätze mit der Identifizierung der Serverstruktur und der Identifizierung der Code-Bezeichnungen enthalten. Der Computer 1,101, der die E-Mail empfängt, gibt über eine Anzeigevorrichtung 6, 106 für den Benutzer die eindeutige Frage aus, ob der Benutzer der Anfrage des Absenders zustimmen will. Erst nach dieser aktiven Bestätigung dieser Frage durch eine Eingabe über ein Eingabemittel (Tastatur 7, 107 oder Maus) führen die Computer 1 101 das Verfahren zum Austausch der IP-Adresse aus. Auf diese Weise wird vermieden, dass das erfindungsgemäße Verfahren ungewollt mit fremden Computern durchgeführt wird.

Da die ausgetauschten Datensätze eine begrenzte zeitliche Gültigkeit haben, ist es für Dritte nicht interessant, diese zu überwachen und abzufangen. Ein einmal abgefangener Datensatz verliert schnell seine Bedeutung. Somit halten auch nur Computer 1, 101 den permanenten direkten Kontakt aufrecht, wenn sie in regelmäßigen Abständen gemäß dem erfindungsgemäßen Verfahren Kontakt zueinander aufnehmen.

Wird bis zum Ablauf der Gültigkeit der Information in den Datensätzen kein neuer direkter Kontakt zwischen den Computern 1, 101 aufgebaut, muss das Verfahren erneut durch Übersendung einer E-Mail von einem der beiden Computer 1,101 gestartet werden.

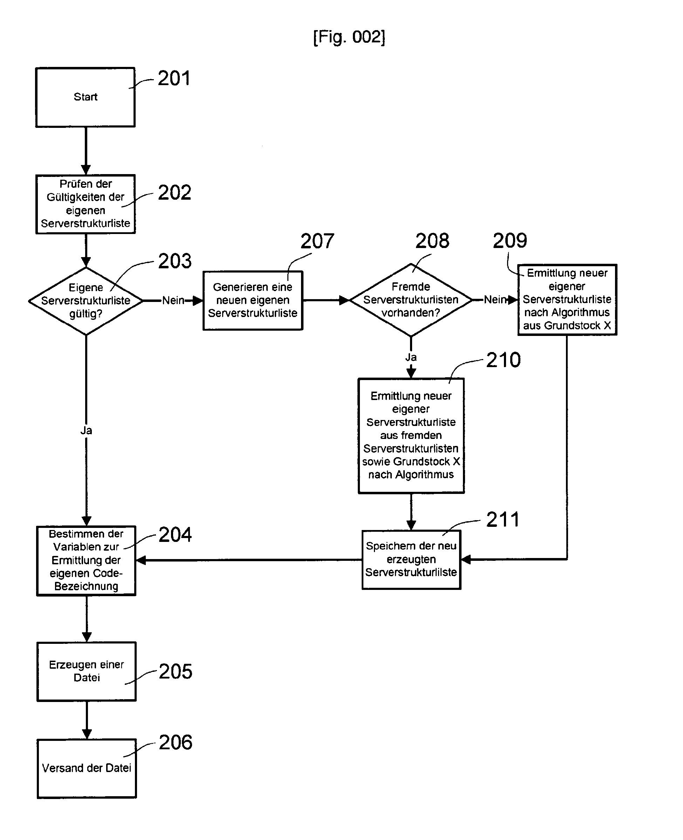

Die Fig. 2 zeigt das Flussdiagramm eines Computerprogramms, welches die für das erfindungsgemäße Verfahren erforderlichen ersten und zweiten Datensätze erzeugt.

Nach dem Start 201 des Programms wird die Gültigkeit der eigenen Liste der Serverstrukturen geprüft 202. Ergibt die Prüfung bei einer entsprechenden Verzweigung 203 die Gültigkeit der Serverstrukturliste, so werden die Variablen für einen Algorithmus zur Bestimmung der Code-Bezeichnung bestimmt 204. Der in dem Computerprogramm gemäß der Erfindung verwendete Algorithmus kann jede beliebige Rechenoperation sein, die bei der Verwendung eines bestimmten Variablensatzes eindeutig zu einer Code-Bezeichnung führt. Dabei sind für die Code-Bezeichnungen die Vorgaben der Serverstruktur, wie z.B. die Anzahl der Zeichen sowie der Satz der zulässigen Zeichen in der Code-Bezeichnung, zu berücksichtigen. Zur Bestimmung der Variablen werden vorzugsweise Zufallsgeneratoren verwendet. Diese können zur Individualisierung der Variablen auf individuelle Daten zurückgreifen, wie z.B. der gespeicherte Name oder die gespeicherte Seriennummer des Computers, die aktuelle Systemzeit oder Daten, die von Eingaben eines Benutzers über eine Eingabevorrichtung wie Maus oder Tastatur abhängen.

Sobald ein Datensatz mit der gültigen Serverstrukturliste und ein Datensatz mit Variablen zur Ermittlung der Code-Bezeichnung erstellt sind, werden beide in eine gemeinsame Datei geschrieben 205 und gemäß dem Verfahren an einen Empfänger-Computer versandt, der zum Abruf der eigenen IP-Adresse berechtigt ist.

Ergibt sich in der Verzweigung 203, dass die eigene Serverstrukturliste nicht gültig ist, wird diese neu generiert 207. Je nachdem, ob eine fremde Serverstrukturliste von dem Partner-Computer vorhanden ist, wird hinter einer weiteren Verzweigung 208 entweder nach einem Algorithmus aus einem Grundstock an verfügbaren Serverstrukturen, d.h. Netzwerken oder Einzelservern, eine Liste erstellt oder es wird unter Berücksichtigung und Verwendung der Serverliste des Partner-Computers eine entsprechende Liste der eigenen Serverstrukturen erstellt. Auch hier hat der Programmierer alle Freiheiten, um eine beliebige und zufällige Generierung einer Serverstrukturliste zu implementieren. Wenn die Serverliste erzeugt und gespeichert ist 211, erfolgt in Schritt 204 die Bestimmung der Variablen für die Berechnung des Nicknames und die Erzeugung und Übertragung der Datei mit den Datensätzen zu den verwendeten Servern und Nicknames. Wie erwähnt, weisen die Datensätze für die Serverstrukturen und für die Code-Bezeichnungen (Nicknames) mehrere zufällig bestimmte Einträge auf, die jeweils mit einem Zeitstempel versehen sind. So ist sichergestellt, dass beim Abfangen eines Datensatzes durch einen unberechtigten Computer dieser Datensatz nach Ablauf der letzten Gültigkeit der Einträge in dem Datensatz unbrauchbar wird.

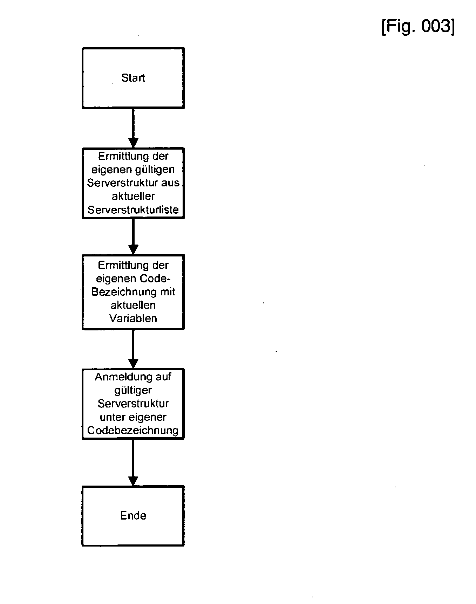

Die Fig. 3 zeigt die Programmschritte, die für die Bereitstellung der eigenen IP-Adresse ausgeführt werden, jedes Mal, wenn sich der Online-Computer neu an das Internet anmeldet. Aus der gemäß Fig. 2 erzeugten Datei, der die eigene Serverstrukturliste und die zeitlich begrenzt gültigen Variablen für die eigene Code-Bezeichnung zu entnehmen sind, wird die aktuell gültige Serverstruktur und die aktuell gültige Code-Bezeichnung (Nickname) ermittelt. Anschließend meldet sich der Online-Computer unter dem ermittelten Nickname auf dem ermittelten IRC-Server an. Dabei wird auf dem IRC-Server die IP-Adresse oder eine DNS-Adresse in Verbindung mit dem Nickname gespeichert.

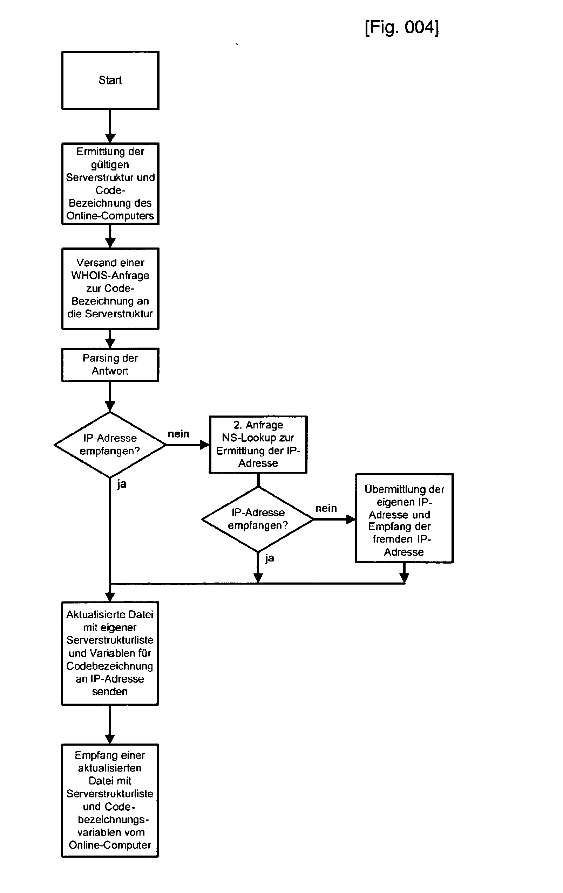

Die Fig. 4 zeigt den Ablauf eines Programm-Moduls, das auf einem Empfänger-Computer abläuft, wenn dieser die IP-Adresse eines Online-Computers ermitteln möchte. Aus der Datei mit den Datensätzen, die der Empfänger-Computer gemäß Fig. 2 von dem Online-Computer erhalten hat, ermittelt der Empfänger-Computer den für den Online-Computer aktuell gültigen IRC-Server bzw. das gültige IRC-Netzwerk und den Nickname. Der Empfänger-Computer sendet an den IRC-Server eine WHOIS-Anfrage und analysiert diese semantisch. Dieser Vorgang wird auch "parsing" genannt. Falls bei dieser Analyse festgestellt wird, dass die IP-Adresse übertragen wurde, wird das Verfahren damit beendet, dass der Empfänger-Computer an die IP-Adresse eine aktualisierte Datei mit den eigenen Server- und Nickname-Datensätzen sendet. Der Online-Computer sendet darauf im Handshake-Verfahren seinerseits aktualisierte Datensätze an den Empfänger-Computer.

Falls das Parsing ergibt, dass die Antwort auf die WHOIS-Anfrage keine IP-Adresse enthält, wird eine zweite Anfrage (NSlookup) abgesendet, um die IP-Adresse zu ermitteln. Anschließend erfolgt das erwähnte Handshake-Verfahren.

Dieser letzte Schritt der Umwandlung der DNS-Adresse in eine IP-Adresse ist nicht unbedingt erforderlich, da ein direkter Datenversand auch an die DNS-Adresse erfolgen kann. Allerdings ist die Verwendung der IP-Adresse vorzuziehen, so dass der Programmablauf der Fig. 4, in dem auf alle Fälle die IP-Adresse ermittelt wird, bevorzugt wird.

Falls auch die WHOIS-Anfrage und die NS-Lookup-Anfrage an den IRC-Server keine gültige IP-Adresse liefert, z.B. weil schon auf die WHOIS-Anfrage keine gültige Adresse des Online-Computers geliefert wurde, wird eine definierte Textnachricht über das IRC-Netz an den Online-Computer gesendet, die die IP-Adresse des Empfänger-Computers enthält. Das auf dem Online-Computer ablaufende erfindungsgemäße Programm analysiert diese Textnachricht und wird durch deren Inhalt dazu veranlasst, eine Nachricht zurückzusenden, die die IP-Adresse des Online-Computers enthält.

Wenn sich am Anfang des in Fig. 4 gezeigten Programmablaufs ergibt, dass die abgespeicherte Datei, die vom Online-Computer empfangen wurde, keine gültigen Daten mehr enthält, lag die letzte Kontaktaufnahme zeitlich zu weit zurück. In diesem Fall ist an den Online-Computer eine E-Mail mit einer aktuellen Datei mit den eigenen Datensätzen gemäß Fig. 2 zu senden und anzufragen, ob der Wiederaufnahme des IP-Adressenaustauschs zugestimmt wird. Ergibt das Parsing der Antwort, dass keine gültige Adresse des Online-Computers ermittelt werden kann, z.B. weil dieser nicht Online ist, wird das Verfahren abgebrochen und zu einem späteren Zeitpunkt wiederholt. Diese Ausnahmeprozeduren sind nicht in Fig. 4 dargestellt.

## Patentansprüche

1. Verfahren zur Bereitstellung einer Adresse eines mit einem Daten-Netzwerk (4) verbundenen Online-Computers (1) für mindestens einen Empfänger-Computer (101), wobei der Online-Computer (1) die folgenden Schritte ausführt:
◆ Übertragung eines ersten Datensatzes mit der Identifizierung mindestens einer global über das Daten-Netzwerk (4) zugreifbaren Serverstruktur (9,10,11) an den Empfänger-Computer (101), wobei die Serverstruktur aus einer Mehrzahl verfügbarer Serverstrukturen (9,10,11) ausgewählt ist;
◆ Übertragung eines zweiten Datensatzes, der mindestens eine Code-Bezeichnung eines bestimmten Benutzers identifiziert, an den Empfänger-Computer (101), wobei die Code-Bezeichnung zum Beispiel ein Nickname zur Anmeldung bei einem IRC-Netzwerk ist,
◆ Abspeicherung der Adresse des Online-Computers (1) in Verbindung mit der identifizierten Code-Bezeichnung auf der identifizierten Serverstruktur (9,10 oder 11).

2. Verfahren nach Anspruch 1, **dadurch gekennzeichnet, dass** der Empfänger-Computer (101) eine Anfrage an die Serverstruktur (9,10,11) sendet, in der die Code-Bezeichnung enthalten ist.

3. Verfahren nach Anspruch 2, **dadurch gekennzeichnet, dass** die Serverstruktur (9,10,11) als Antwort die Adresse des Online-Computers (1) zurücksendet.

4. Verfahren nach Anspruch 2, **dadurch gekennzeichnet, dass** die Serverstruktur (9,10,11) die Anfrage an den Online-Computer (1) weiterleitet und der Online-Computer (1) als Antwort seine Adresse an den Empfänger-Computer (101) zurücksendet.

5. Verfahren nach einem der vorangehenden Ansprüche, **dadurch gekennzeichnet, dass** das Datennetzwerk das Internet (4) und die Adresse eine IP-Adresse ist.

6. Verfahren nach einem der Ansprüche 1 bis 4, **dadurch gekennzeichnet, dass** das Datennetzwerk das Internet (4) und die Adresse eine der IP-Adresse eindeutig zugeordnete Adresse, insbesondere eine DNS-Adresse ist.

7. Verfahren nach Anspruch 6, **dadurch gekennzeichnet, dass** der Empfänger-Computer (101) über eine zweite Anfrage, welche die zugeordnete Adresse enthält, die IP-Adresse des Online-Computers (1) ermittelt.

8. Verfahren nach einem der vorangehenden Ansprüche, **dadurch gekennzeichnet, dass** die Identifizierung einer global über das Daten-Netzwerk (4) zugreifbaren Serverstruktur (9,10,11) der Name eines IRC-Netzwerks (10) ist.

9. Verfahren nach Anspruch 8, **dadurch gekennzeichnet, dass** die von dem Empfänger-Computer (101) abgesendete Anfrage ein an die IRC-Serverstruktur (9,10,11) gesendeter WHOIS-Befehl ist.

10. Verfahren nach einem der vorangehenden Ansprüche, **dadurch gekennzeichnet, dass** der Identifizierung einer global über das Daten-Netzwerk (4) zugreifbaren Serverstruktur (9,10,11) eine zeitlich begrenzte Gültigkeit zugeordnet ist.

11. Verfahren nach Anspruch 10, **dadurch gekennzeichnet, dass** der erste Datensatz eine Mehrzahl von Identifizierungen global über das Daten-Netzwerk (4) zugreifbarer Serverstrukturen (9,10,11) mit zeitlich begrenzter Gültigkeit aufweist, deren Gültigkeitsdauern verschiedene Zeitintervalle abdecken.

12. Verfahren nach einem der vorangehenden Ansprüche, **dadurch gekennzeichnet, dass** der Code-Bezeichnung eine zeitlich begrenzte Gültigkeit zugeordnet ist.

13. Verfahren nach Anspruch 12, **dadurch gekennzeichnet, dass** der zweite Datensatz eine Mehrzahl von Code-Bezeichnungen mit zeitlich begrenzter Gültigkeit identifiziert, deren Gültigkeitsdauern verschiedene Zeitintervalle abdecken.

14. Verfahren nach einem der vorangehenden Ansprüche, **dadurch gekennzeichnet, dass** die Code-Bezeichnung mittels eines definierten Algorithmus mit mindestens einer Variablen berechnet wird und dass der zweite Datensatz mindestens einen Wert für die mindestens eine Variable zur Berechnung der Code-Bezeichnung aufweist.

15. Verfahren nach Anspruch 14, **dadurch gekennzeichnet, dass** der Variablen eine zeitlich begrenzte Gültigkeit zugeordnet ist.

16. Verfahren nach Anspruch 15, **dadurch gekennzeichnet, dass** der zweite Datensatz eine Mehrzahl von Variablen mit zeitlich begrenzter Gültigkeit aufweist, deren Gültigkeitsdauern verschiedene Zeitintervalle abdecken.

17. Verfahren nach einem der Ansprüche 14 bis 16, **dadurch gekennzeichnet, dass** der Algorithmus zur Berechnung der Code-Bezeichnung zeitabhängige Informationen, z.B. das Datum, verwendet.

18. Verfahren nach einem der vorangehenden Ansprüche, **dadurch gekennzeichnet, dass** von dem Empfänger-Computer (101) an den Online-Computer (1) ebenfalls
◆ ein erster Datensatz mit der Identifizierung mindestens einer global über das Daten-Netzwerk (4) zugreifbaren Serverstruktur (9,10,11) übertragen wird, wobei die Serverstruktur aus einer Mehrzahl verfügbarer Serverstrukturen (9,10,11) ausgewählt ist;
◆ ein zweiter Datensatz übertragen wird, der mindestens eine Code-Bezeichnung identifiziert,
◆ und dass von dem Empfänger-Computer (101) die ihm zugeteilte Adresse in Verbindung mit der identifizierten Code-Bezeichnung auf der identifizierten Serverstruktur (9,10 oder 11) abgespeichert wird.

19. Verfahren nach einem der vorangehenden Ansprüche, **dadurch gekennzeichnet, dass** vor der erstmaligen Übersendung des ersten und des zweiten Datensatzes eine diese Übersendung betätigende Eingabe des Benutzers des Online-Computer mittels einer an den Online-Computer angeschlossenen Eingabevorrichtung abgefragt wird.

20. Verfahren nach Anspruch 19, **dadurch gekennzeichnet, dass** die bestätigende Eingabe der Befehl zur Absendung einer elektronischen Nachricht mit dem ersten und dem zweiten Datensatz, insbesondere einer E-Mail, an eine bestimmte Adresse ist.

21. Verfahren nach Anspruch 19 oder 20, **dadurch gekennzeichnet, dass** der Empfängen-Computer nach dem Empfang einer elektronischen Nachricht mit einem ersten und einen zweiten Datensatz die Identität des Absenders der Nachricht auf einer mit dem Empfängen-Computer verbundenen Anzeigevorrichtung anzeigt, wobei der Benutzer des Empfängen-Computers durch eine Mitteilung auf der Anzeigevorrichtung zur Eingabe einer Bestätigung über eine mit dem Empfängen-Computer verbunden Eingabevorrichtung aufgefordert wird, und wobei ein erster und ein zweiter Datensatz erst nach der Eingabe der Bestätigung zurück gesendet wird.

22. Computerprogrammprodukt, das direkt in den Arbeitsspeicher eines Computers geladen werden kann und Softwarecode-Abschnitte umfasst, mit denen die Schritte gemäß einem der vorangehenden Ansprüche ausgeführt werden, wenn das Produkt auf einem Computer läuft.

## Claims

1. Method for provision of an address of an online computer (1) connected to a data network (4) for at least one receiver computer (101), wherein the online computer (1) performs the following steps:
◆ transmission of a first data record with the identification of at least one server structure (9, 10, 11) that can be accessed globally via the data network (4) to the receiver computer (101), wherein the server structure is selected from a plurality of available server structures (9, 10, 11);
◆ transmission of a second data record, which identifies at least one code designation of a specific user, to the receiver computer (101), wherein the code designation is for example a nickname for logging-on in an IRC network,
◆ storage of the address of the online computer (1) in conjunction with the identified code designation on the identified server structure (9, 10 or 11).

2. Method according to Claim 1, **characterized in that** the receiver computer (101) sends an enquiry to the server structure (9, 10, 11) in which the code designation is contained.

3. Method according to Claim 2, **characterized in that** the server structure (9, 10, 11) sends back as a reply the address of the online computer (1).

4. Method according to Claim 2, **characterized in that** the server structure (9, 10, 11) forwards the enquiry to the online computer (1) and the online computer (1) sends back its address as a reply to the receiver computer (101).

5. Method according to any of the preceding claims, **characterized in that** the data network is the Internet (4) and the address is an IP address.

6. Method according to any of Claims 1 to 4, **characterized in that** the data network is the Internet (4) and the address is an address uniquely assigned to the IP address, in particular a DNS address.

7. Method according to Claim 6, **characterized in that** the receiver computer (101) determines the IP address of the online computer (1) by means of a second enquiry, which contains the assigned address.

8. Method according to any of the preceding claims, **characterized in that** the identification of a server structure (9, 10, 11) that can be accessed globally via the data network (4) is the name of an IRC network (10).

9. Method according to Claim 8, **characterized in that** the enquiry sent by the receiver computer (101) is a WHOIS command sent to the IRC server structure (9, 10, 11).

10. Method according to any of the preceding claims, **characterized in that** the identification of a server structure (9, 10, 11) that can be accessed globally via the data network (4) is assigned a temporally limited validity.

11. Method according to Claim 10, **characterized in that** the first data record has a plurality of identifications of server structures (9, 10, 11) that can be accessed globally via the data network (4) with temporally limited validity, the validity durations of which cover different time intervals.

12. Method according to any of the preceding claims, **characterized in that** the code designation is assigned a temporally limited validity.

13. Method according to Claim 12, **characterized in that** the second data record identifies a plurality of code designations with temporally limited validity, the validity durations of which cover different time intervals.

14. Method according to any of the preceding claims, **characterized in that** the code designation is calculated by means of a defined algorithm with at least one variable, and **in that** the second data record has at least one value for the at least one variable for calculating the code designation.

15. Method according to Claim 14, **characterized in that** the variable is assigned a temporally limited validity.

16. Method according to Claim 15, **characterized in that** the second data record has a plurality of variables with temporally limited validity, the validity durations of which cover different time intervals.

17. Method according to any of Claims 14 to 16, **characterized in that** the algorithm for calculating the code designation uses time-dependent information, e.g. the date.

18. Method according to any of the preceding claims, **characterized in that** from the receiver computer (101) to the online computer (1) likewise
◆ a first data record with the identification of at least one server structure (9, 10, 11) that can be accessed globally via the data network (4) is transmitted, wherein the server structure is selected from a plurality of available server structures (9, 10, 11);
◆ a second data record is transmitted, which identifies at least one code designation,
◆ and **in that** the receiver computer (101) stores the address allocated to it in conjunction with the identified code designation on the identified server structure (9, 10 or 11).

19. Method according to any of the preceding claims, **characterized in that** the first transmission of the first and of the second data records is preceded by interrogation of an input - which confirms said transmission - by the user at the online computer by means of an input device connected to the online computer.

20. Method according to Claim 19, **characterized in that** the confirming input is the command for sending an electronic message with the first and the second data record, in particular an e-mail, to a specific address.

21. Method according to Claim 19 or 20, **characterized in that** the receiver computer, after receiving an electronic message with a first and a second data record, displays the identity of the sender of the message on a display device connected to the receiver computer, wherein the user of the receiver computer is requested by a notification on the display device to input a confirmation via an input device connected to the receiver computer, and wherein a first and a second data record are sent back only after the confirmation has been input.

22. Computer program product which can be loaded directly into the main memory of the computer and comprises software code sections by which the steps according to any of the preceding claims are performed when the product is executed on a computer.

## Revendications

1. Procédé pour fournir une adresse d'un ordinateur en ligne (1) relié à un réseau de données (4) pour au moins un ordinateur récepteur (101), l'ordinateur en ligne (1) réalisant les étapes suivantes :
- transmission, à l'ordinateur récepteur (101), d'un premier jeu de données avec l'identification d'au moins une structure de serveur (9, 10, 11) accessible depuis le monde entier via le réseau de données (4), la structure de serveur étant choisie parmi une pluralité de structures de serveur (9, 10, 11) disponibles ;
- transmission d'un deuxième jeu de données qui identifie au moins une désignation de code d'un utilisateur donné au niveau de l'ordinateur récepteur (101), la désignation de code étant par exemple un surnom utilisé pour ouvrir une session sur un réseau IRC ;
- mémorisation de l'adresse de l'ordinateur en ligne (1) conjointement avec la désignation de code identifiée sur la structure de serveur (9, 10 ou 11) identifiée.

2. Procédé selon la revendication 1, **caractérisé en ce que** l'ordinateur récepteur (101) envoie une requête à la structure de serveur (9, 10, 11) contenant la désignation de code.

3. Procédé selon la revendication 2, **caractérisé en ce que** la structure de serveur (9, 10, 11) renvoie en réponse l'adresse de l'ordinateur en ligne (1).

4. Procédé selon la revendication 2**, caractérisé en ce que** la structure de serveur (9, 10, 11) redirige la requête à l'ordinateur en ligne (1) et **en ce que** l'ordinateur en ligne (1) renvoie en réponse son adresse à l'ordinateur récepteur (101).

5. Procédé selon l'une quelconque des revendications précédentes, **caractérisé en ce que** le réseau de données est Internet (4) et que l'adresse est une adresse IP.

6. Procédé selon l'une quelconque des revendications 1 à 4, **caractérisé en ce que** le réseau de données est Internet (4) et que l'adresse est une adresse associée sans ambigüité à l'adresse IP, notamment une adresse DNS.

7. Procédé selon la revendication 6, **caractérisé en ce que** l'ordinateur récepteur (101) détermine l'adresse IP de l'ordinateur en ligne (1) par l'intermédiaire d'une deuxième requête contenant l'adresse associée.

8. Procédé selon l'une quelconque des revendications précédentes, **caractérisé en ce que** l'identification d'une structure de serveur (9, 10, 11) accessible depuis le monde entier via le réseau de données (4) est le nom d'un réseau IRC (10).

9. Procédé selon la revendication 8, **caractérisé en ce que** la requête envoyée par l'ordinateur récepteur (101) est une commande WHOIS envoyée à la structure de serveur IRC (9, 10, 11).

10. Procédé selon l'une quelconque des revendications précédentes, **caractérisé en ce que** l'identification d'une structure de serveur (9, 10, 11) accessible depuis le monde entier via le réseau de données (4) est associée à une validité limitée dans le temps.

11. Procédé selon la revendication 10, **caractérisé en ce que** le premier jeu de données comporte une pluralité d'identifications de structures de serveur (9, 10, 11) accessibles depuis le monde entier via le réseau de données (4) avec une validité limitée dans le temps dont les durées de validité recouvrent différents intervalles de temps.

12. Procédé selon l'une quelconque des revendications précédentes, **caractérisé en ce que** la désignation de code est associée à une validité limitée dans le temps.

13. Procédé selon la revendication 12, **caractérisé en ce que** le deuxième jeu de données identifie une pluralité de désignations de code à validité limitée dans le temps dont les durées de validité recouvrent différents intervalles de temps.

14. Procédé selon l'une quelconque des revendications précédentes, **caractérisé en ce que** la désignation de code est calculée à l'aide d'un algorithme défini comprenant au moins une variable et que le deuxième jeu de données comprend au moins une valeur pour l'au moins une variable afin de calculer la désignation de code.

15. Procédé selon la revendication 14, **caractérisé en ce que** les variables sont associées à une validité limitée dans le temps.

16. Procédé selon la revendication 15, **caractérisé en ce que** le deuxième jeu de données comprend une pluralité de variables à validité limitée dans le temps dont les durées de validité recouvrent différents intervalles de temps.

17. Procédé selon l'une quelconque des revendications 14 à 16, **caractérisé en ce que** l'algorithme est utilisé pour calculer les informations relatives à la durée associée à la désignation de code, par exemple la date.

18. Procédé selon l'une quelconque des revendications précédentes, **caractérisé en ce qu'**est également transmis à l'ordinateur en ligne (1) par l'ordinateur récepteur (101) :
- un premier jeu de données contenant l'identification à au moins une structure de serveur (9, 10, 11) accessible via le réseau de données (4), la structure de serveur étant choisie parmi une pluralité de structures de serveur (9, 10, 11) disponibles ;
- un deuxième jeu de données identifiant au moins une désignation de code ; et
- l'adresse qui est impartie par l'ordinateur récepteur (101) conjointement avec la désignation de code identifiée est mémorisée par celui-ci sur la structure de serveur (9, 10 ou 11).

19. Procédé selon l'une quelconque des revendications précédentes, **caractérisé en ce qu'**avant l'envoi du premier et du deuxième jeu de données, une entrée de l'utilisateur de l'ordinateur en ligne confirmant cet envoi est demandée à l'aide d'un dispositif d'entrée raccordé à l'ordinateur en ligne.

20. Procédé selon la revendication 19, **caractérisé en ce que** l'entrée de confirmation est un ordre d'envoi d'un message électronique contenant le premier et le deuxième jeu de données, notamment un courrier électronique envoyé à une adresse donnée.

21. Procédé selon la revendication 19 ou 20, **caractérisé en ce que** l'ordinateur récepteur affiche, après réception d'un message électronique contenant un premier et un deuxième jeu de données, l'identité de l'émetteur du message sur un dispositif d'affichage relié à l'ordinateur récepteur, l'utilisateur de l'ordinateur récepteur recevant un message apparaissant sur le dispositif d'affichage lui demandant d'entrer une confirmation via un dispositif de saisie relié à l'ordinateur récepteur et un premier et un deuxième jeu de données n'étant renvoyé qu'après la saisie de la confirmation.

22. Produit de programme informatique pouvant être directement chargé dans la mémoire de travail d'un ordinateur et comprenant des segments de code logiciel avec lesquels les étapes peuvent être réalisées selon l'une quelconque des revendications précédentes, lorsque le produit est exécuté sur un ordinateur.
